# EUROPEAN PATENT SPECIFICATION

(11) **EP 0 475 317 B1**
(45) Date of publication and mention of the grant of the patent: **14.08.1996**
(21) Application number: 91115199.1
(22) Date of filing: 09.09.1991
(51) Int. Cl.: G03B 17/30

(54) **Method for initial advance of a film in a photographic camera**
Vorschubverfahren für den Filmanfang in einer photographischen Kamera
Méthode d'avancement initial d'un film dans une caméra photographique

(30) Priority: 10.09.1990 JP 240396/90; 12.06.1991 JP 167697/91
(43) Date of publication of application: 18.03.1992
(73) Proprietor: FUJI PHOTO FILM CO., LTD., Kanagawa (JP)
(72) Inventor: Takatori, Tetsuya, c/o Fuji Photo Film Co., Ltd., Minami-Ashigara-shi, Kanagawa (JP); Kataoka, Hideaki, c/o Fuji Photo Film Co., Ltd., Minami-Ashigara-shi, Kanagawa (JP)
(74) Representative: Grünecker, Kinkeldey, Stockmair & Schwanhäusser Anwaltssozietät

(56) References cited:
- US-A- 4 779 111
- US-A- 4 855 773
- US-A- 4 887 776
- US-A- 4 939 531
- US-A- 4 947 197

## Description

### BACKGROUND OF THE INVENTION

### 1. Field of the Invention

The present invention relates to a photographic camera and a method for initially advancing the photographic film in the same, more particularly to a camera in which rotation of a spool of a film cassette causes a film leader to advance out of the film cassette, and a film initial advance method with the same.

### 2. Description Relative to the Prior Art

There is a 35 mm film cassette of which film leader does not protrude previously but contained in a cassette shell, and which is thus easily loaded in a camera, as disclosed in U.S.P. 4,832,275, 4,834,306 and 4,846,418. Rotation of a spool by means of a film feeding mechanism of the camera in the direction of unwinding the photographic film causes the film leader to advance to an outside of the cassette shell through a film passageway of the film cassette. Flanges of the spool or ridges inside the cassette shell are provided for preventing a film roll wound on the spool from loosening.

A camera suitable for using such a self-advancing film cassette as described above is disclosed in U.S.P 4,855,773 according to the precharacterizing parts of claims 1,7 and 8, and Japanese Patent Laid-open Publication Nos. 2-113230 and 2-67534. The film feeding mechanism incorporated in the camera rotates a fork for transporting the photographic film in a normal or unwinding direction and a reverse or rewinding direction. In a camera as disclosed in U.S.P. 4,860,041, the fork is rotated in the normal direction in accordance with an operation of closing a back lid so as to carry out a film initial advance until positioning a first frame of the photographic film to be exposed on an exposure aperture of the camera.

In such a film cassette, however, the film roll might be involved in a small loosening among convolutions or turns of film. A degree of loosening in the film roll enlarges a pressure or friction in contact between the outer surface of the film roll and the ridges or inner surface of the flanges. If the camera loaded with the film cassette rotates the spool for advancing the film leader, the film leader might be stopped on an inner surface of the cassette shell by a high pressure in contact therewith so as to cause a "film jam". A larger force for rotating the fork will serve to prevent a film jam, but necessitates a stronger motor in the camera which might raise the cost of the camera. The film feeding mechanism must be made from a tough material which also might raise the cost.

### SUMMARY OF THE INVENTION

It is therefore an object of the present invention to provide a photographic camera for use with a self-advancing film cassette, in which rotation of the spool is free from a film jam so as to advance a film leader out of the film cassette.

This object is solved by apparatus comprising the features of claims 1, 7 and 8 and methods comprising the features of claims 11, 12 and 13.

Further embodiments have been claimed in the sub-claims.

### BRIEF DESCRIPTION OF THE DRAWINGS

The above objects and advantages of the present invention will become more apparent from the following detailed description when read in connection with the accompanying drawings, in which:
Fig. 1 is a perspective view illustrating a camera according to the present invention, and a film cassette to be loaded therein;
Fig. 2 is a block diagram illustrating a relevant circuit of a film feeding mechanism of the camera illustrated in Fig. 1;
Fig. 3 is a section view illustrating the film cassette illustrated in Fig. 1;
Fig. 4 is a section view in which an arresting hole formed in a film leader of the film cassette illustrated in Fig. 3 is arrested in a hook of the film cassette;
Fig. 5 is a section view in which the arresting hole in Fig. 4 is to be disengaged from the hook;
Fig. 6 is a section view in which the film leader illustrated in Fig. 5 is advanced out of a film passageway of the film cassette;
Fig. 7 is a flowchart illustrating an operation of advancing the film leader in the camera illustrated in Fig. 2;
Fig. 8 is a flowchart illustrating an operation of advancing a film leader in a camera according to a preferred embodiment;
Fig. 9 is a section view illustrating another film cassette to be loaded in the camera illustrated in Fig. 8;
Fig. 10 is a section view in which a film leader is to be advanced out of the film cassette illustrated in Fig. 9;
Fig. 11 is a section view in which the film leader in Fig. 10 is advanced out of the film cassette;
Fig. 12 is a flowchart illustrating an operation of advancing a film leader in a camera according to another preferred embodiment;
Fig. 13 is a block diagram illustrating a relevant circuit of a film feeding mechanism of a camera according to a further preferred embodiment; and
Fig. 14 is a flowchart illustrating an operation of advancing a film leader in the camera illustrated in Fig. 13.

### DETAILED DESCRIPTION OF THE PREFERRED EMBODIMENTS OF THE PRESENT INVENTION

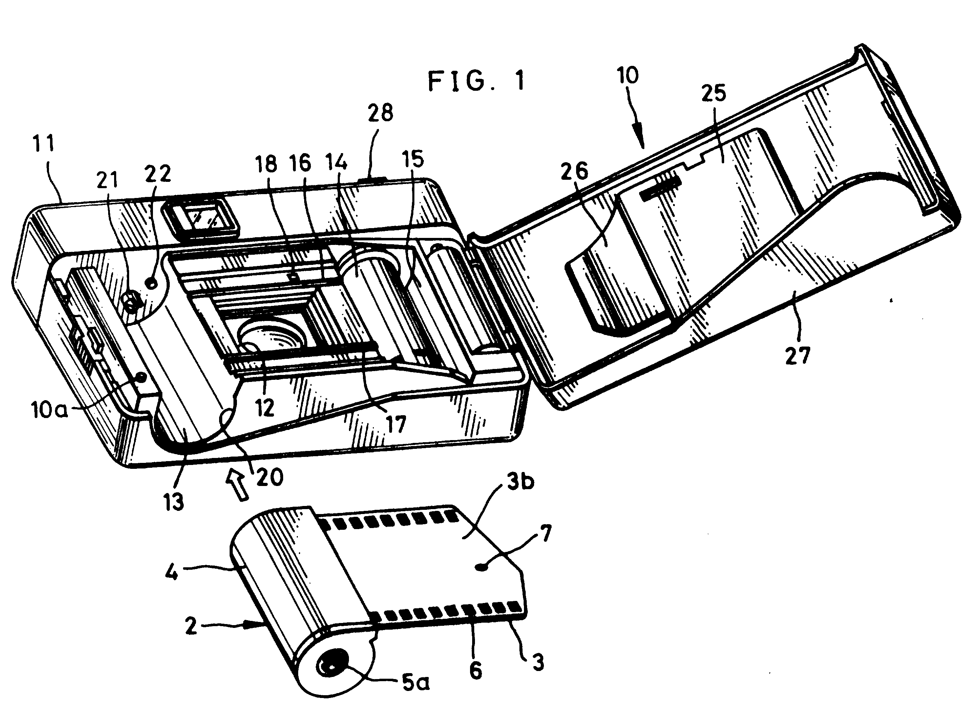

In Fig. 1 illustrating a camera according to a preferred embodiment of the present invention and a photographic film cassette 2 for use therewith, the film cassette 2 is provided with a construction in which a photographic film 3 is contained up to the leading end, and rotation of a spool 5a causes the photographic film 3 to advance. The film cassette 2 consists of the photographic film 3, a cassette shell 4 for containing the photographic film 3 in light-tight fashion, and the spool 5a with the photographic film 3 wound thereon in a roll. The photographic film 3 is provided with perforations 6, well-known in the art, formed out of frames to be exposed, and an arresting hole 7 on a film leader 3b of the photographic film 3. The number of the perforations 6 is determined to be eight per frame to be exposed.

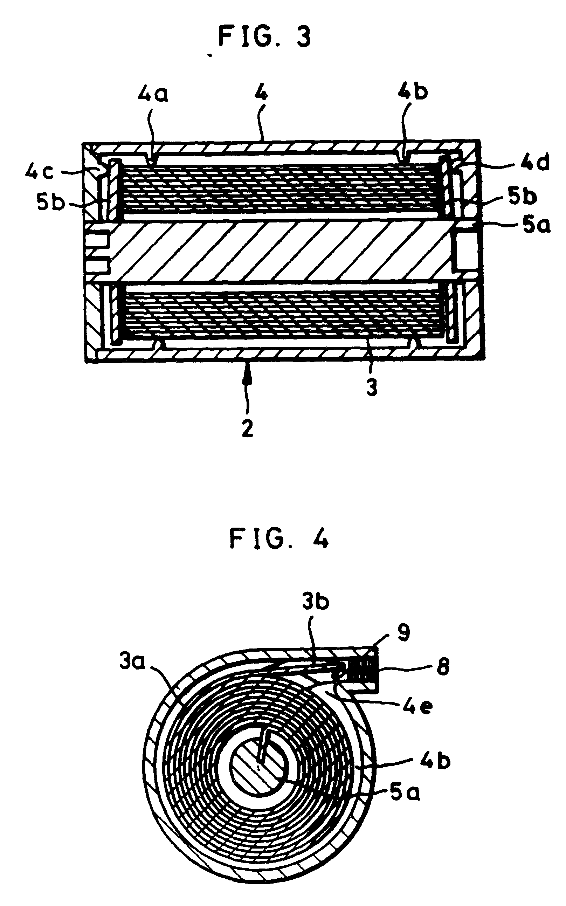

In Fig. 3 illustrating the inside of the film cassette, a pair of flanges 5b are fitted on both ends of the spool 5a. A pair of ridges 4c and 4d are formed on lateral walls of the inside surface of the cassette shell 4, and are in contact with the flanges 5b to press them inward. The flanges 5b clamp both lateral edges of the photographic film 3 in order to prevent a film roll 3a from loosening. A pair of annular ridges 4a and 4b are formed on a circumferential surface of the cassette shell 4, and are in contact with the outermost turn of the loosened film roll 3a as illustrated in Fig. 4 so as to limit the diameter of the film roll 3a to the diameter of the top of the flanges 5b. The trailing end of the photographic film 3 is arrested on the spool 5a.

A hook 9 is formed integrally with the cassette shell 4 in the vicinity of a film passageway 8 in order to be inserted in the arresting hole 7 formed on the film leader 3b to be arrested in the vicinity of the film passageway 8. The hook 9 is provided with an inclined surface formed thereon, which serves for making it easy to disengage the arresting hole 7 from the hook 9 when advancing the film leader 3b through the film passageway 8 toward the outside. If the arresting hole 7 fails to be arrested by the hook 9, the film leader 3b would be fully wound around the spool 5a in the cassette shell 4, but can be separated by a separating claw 4e formed on the annular ridge 4b from the film roll 3a and advanced through the film passageway 8, which is caused by rotation of the spool 5 in a normal direction or that of unwinding the photographic film 3.

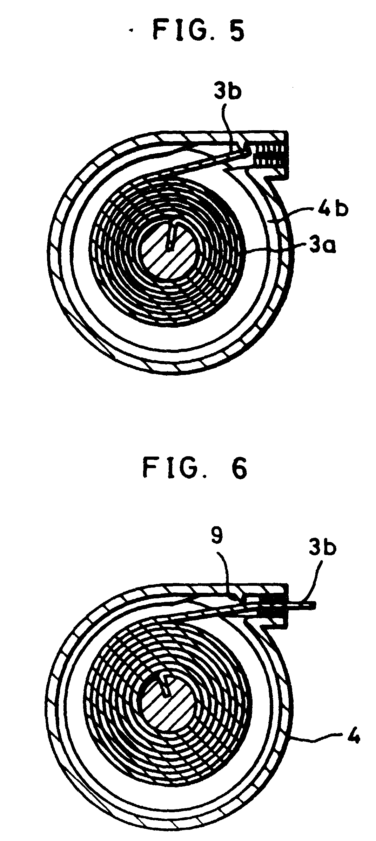

In the film cassette 2 constructed as above, the film roll 3a rotates when rotating the spool 5 in the normal direction. The arresting hole 7 is disengaged from the hook 9, so that the film leader 3b is advanced through the film passageway 8 out of the cassette shell 4 as illustrated in Fig. 6.

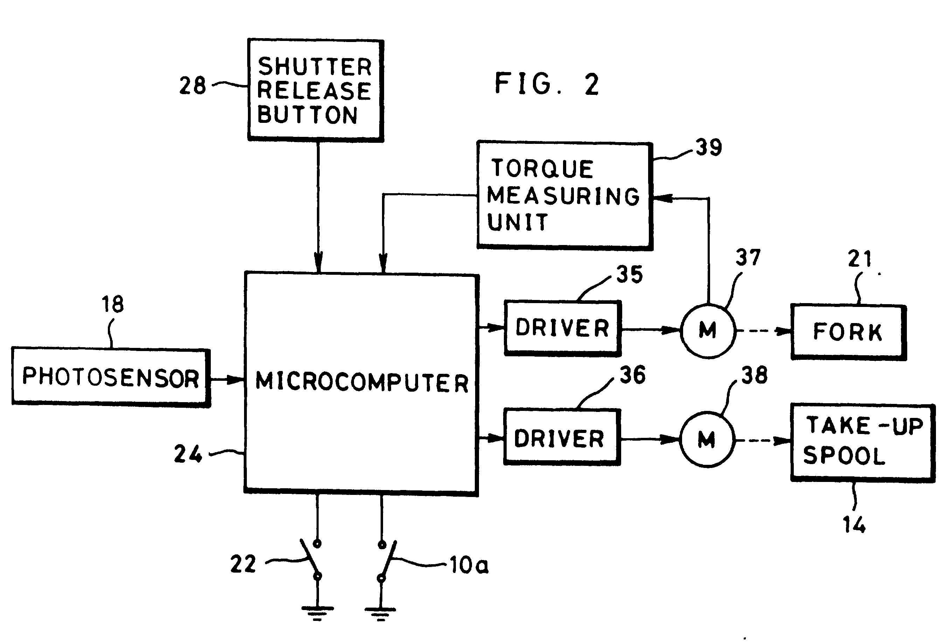

An exposure aperture 12 is formed on the center of the camera body 11 with a back lid 10 open in Fig. 1. The left side to the exposure aperture 12 in the camera body 11 is provided with a cassette chamber 13, whereas the right side is provided with a film take-up chamber 15 in which a take-up spool 14 is supported. A pair of guide rails 16 and 17 are formed along the upper and lower sides of the exposure aperture 12 between the cassette chamber 13 and the film take-up chamber 15. In the vicinity of the guide rail 16, reflection-type photo-interrupter or photosensor 18 is provided in the position of passing the perforations 6 of the photographic film 3 in a disposition vertical to the direction of feeding the photographic film 3. The photosensor 18 detects a passage of the photographic film 3 and supplies a detecting signal to a microcomputer 24 as illustrated in Fig. 2. In accordance with the detecting signal supplied from the photosensor 18, the microcomputer 24 controls the rotation of the take-up spool 14 and a fork 21, later to be described in detail, so as to position each frame to be exposed on the exposure aperture 12.

An opening 20 is formed on the bottom of the camera body 11, through which opening the film cassette 2 is inserted in the cassette chamber 13 in the axial direction of the spool 5. The fork 21 is disposed in the innermost surface of the cassette chamber 13, and engaged with the spool 5 to rotate it in both normal and reverse directions, feeding and rewinding the photographic film 3. The rotation of the fork 21 is carried out by driving a motor 37 incorporated in the camera body 11. A cassette detecting switch 22 is provided in the vicinity of the fork 21 for detecting the insertion of the film cassette 2. When the film cassette 2 is right loaded in the camera body 11, the switch 22 is pushed to be actuated, and supplies an ON signal to the microcomputer 24.

A pressure plate 25 and a guide plate 26 well-known in the art are attached to the back lid 10, and causes the take-up spool 14 to take up the film leader 3b advanced out of the cassette shell 4. A bottom lid 27 is formed integrally with the back lid 10 for shielding the opening 20 from light. The open/closed state of the back lid 10 is detected by a back lid switch 10a situated in the vicinity of the cassette chamber 13 and forwarded to the microcomputer 24. A shutter release button 28 is provided on the top of the camera body 11. After each operation of releasing the shutter by use of the shutter release button 28, the photographic film 3 is automatically fed frame by frame.

In Fig. 2 illustrating an electric circuit of a film feeding mechanism, the film feeding mechanism is wholly controlled by the microcomputer 24. The microcomputer 24 is supplied with signals from the cassette detecting switch 22, the back lid switch 10a, the photosensor 18 and the shutter release button 28, processes the supplied signals in accordance with a predetermined sequence, and controls motors 37 and 38 by use of drivers 35 and 36.

A torque measuring unit 39 is connected to the motor 37, and measures a current flowing therein during rotation of the motor 37 to detect a rotary load applied to the fork 21 in proportion to this current. When the rotary load surpasses a predetermined value, the torque measuring unit 39 supplies the microcomputer 24 with a stop signal for stopping the motor 37. The microcomputer 24 then supplies a film feeding signal to the driver 35 for rotating the fork 21 in the normal direction so as to drive the motor 37.

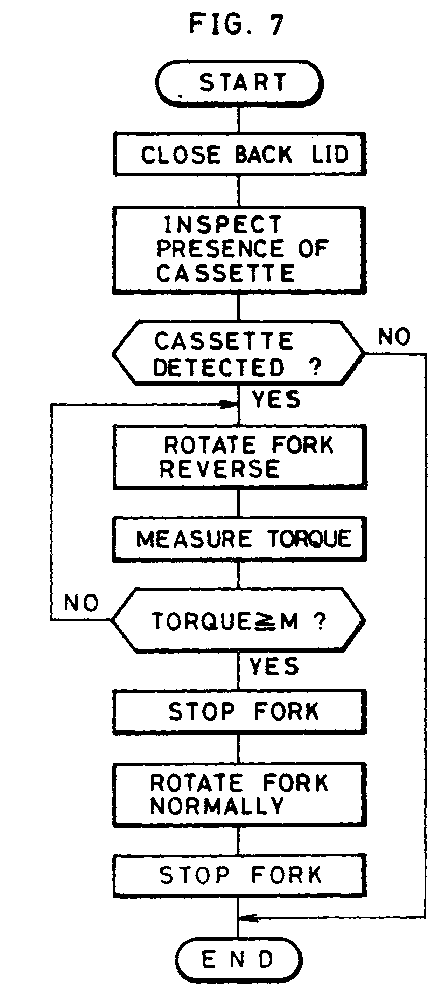

The operation of the above-constructed camera is now described with reference to Figs. 1 and 5 to 7. When the back lid 10 is close with the cassette chamber 13 loaded with the film cassette 2, the back lid switch 10a and the cassette detecting switch 22 are actuated. The microcomputer 24 causes the driver 35 to drive the motor 37, and causes the fork 21 to rotate in the reverse direction. The spool 5 is thereby rotated in the reverse direction. In the film cassette 2, the film roll 3a is wound more tightly because the film leader 3b is arrested by the hook 9.

The rotary load applied to the fork 21 increases according to increasing tightness in winding the film roll 3a. The torque measuring unit 39 supplies the microcomputer 24 with a stop signal when detecting a current corresponding to a predetermined rotary load M. The microcomputer 24 effects a control to stop the motor 37 in rotation. The outer diameter of winding the film roll 3a in this state is smaller as illustrated in Fig. 5. Accordingly the outer surface of the film roll 3a is in no contact with the annular ridges 4a and 4b. The film roll 3a wound so tightly is clamped between the flanges 5b and kept in the state tightly wound. The rotary load M is preferably determined to be 300 to 1000 gf·cm.

The microcomputer 24 supplies the driver 35 with a film feeding signal to control the motor 37. The motor 37 is driven to rotate the fork 21 in the normal direction. The rotation of the fork 21 causes the spool 5 to rotate in the normal direction so as to advance the film leader 3b out of the cassette shell 4. The advance of the film leader 3b is carried out in a state of no contact between the outer surface of the film roll 3a and the annular ridges 4a and 4b, so that a small torque for driving the motor 37 is sufficient.

The photographic film 3 is slid along the guide rails 16 and 17, sent to the film take-up chamber 15, and taken up on the take-up spool 14. The take-up spool 14 has claws for being engaged with the perforations 6, by use of which claws the film leader 3b is reliably taken up on the take-up spool 14 in rotation in the direction the same as the fork 21 under the control of the microcomputer 24. The microcomputer 24 counts the perforations 6 by receiving signals from the photosensor 18 while feeding the photographic film 3, and supplies the drivers 35 and 36 with a drive stop signal to stop the motors 37 and 38 when the counted number of perforations increases up to a predetermined number. A first frame to be exposed of the photographic film 3 is positioned on the exposure aperture 12. Then the film initial advance is completed.

When the shutter release button 28 is pressed to take a photograph, the photographic film 3 is automatically wound up, of which a second frame to be exposed is positioned on the exposure aperture 12. Repetition of taking a photograph causes the camera to wind up all the photographic film 3. When no further photographic film 3 is wound up, the take-up spool 14 and then the motor 38 receive a larger load. In accordance with detecting such a larger load, the microcomputer 24 controls the motors 37 and 38 to change the rotation to the reverse direction. The spool 5 is rotated in the reverse direction to wind the photographic film 3 after exposure into the cassette shell 4. The hook 9 thereafter arrests the arresting hole 7 when rewinding the film leader 3b to stop the film leader 3b in the vicinity of the film passageway 8. The motor 37 is provided with a load by use of the fork 21, so that the microcomputer 24 stops the motors 37 and 38 to finish rewinding the photographic film 3 in accordance with the application of load.

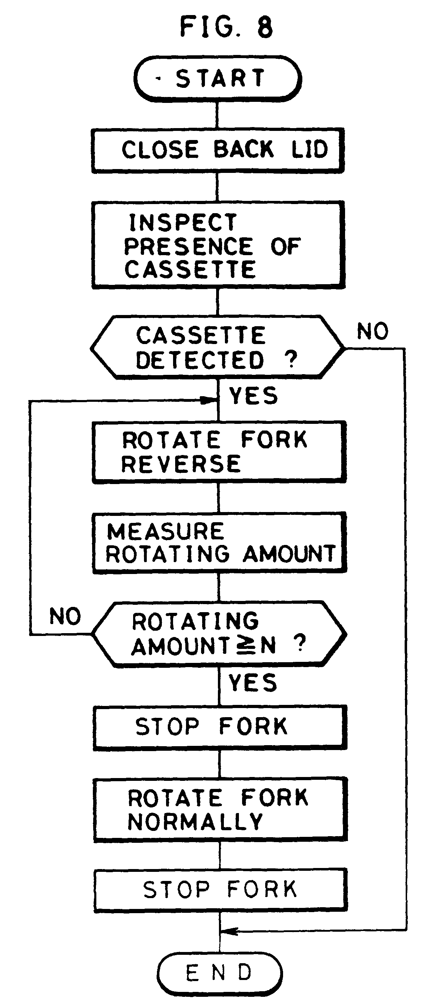

Referring to Fig. 8 illustrating a film leader advancing method according to another preferred embodiment of the present invention, a film cassette 50 for use with a camera of the present embodiment has no construction of arresting the film leader 3b on the inside of the cassette shell 4, unlike the former embodiment.

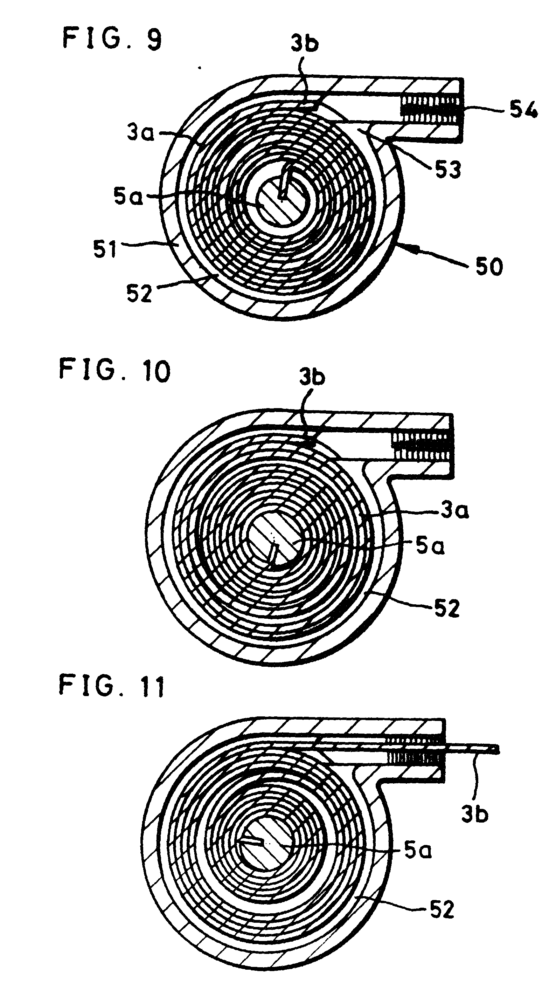

Figs. 9 to 11 illustrate the film cassette 50, of which a cassette shell 51 is provided with a pair of annular ridges 52 formed inside for preventing the photographic film 3 wound on the spool 5 from loosening. A separating claw 53 is formed on one of the annular ridges 52, and separates the film leader 3b rotating in the normal direction from the outer surface of the film roll 3a to guide it to a film passageway 54. Rotation of the spool 5 of the film cassette 50 in the normal direction can cause the film leader 3b to advance out of the cassette shell 51. The film roll 3a is involved in a loosening with time because of a stiffness of the photographic film 3. There is formed a spacing between the spool 5 and the innermost turn of film, whereas outer turns are wound tightly or densely. The outermost turn presses the annular ridges 52 with a large force.

Instead of the torque measuring unit 39 of the former embodiment, the camera for use with the film cassette 50 is provided with a rotating amount measuring unit for measuring the rotating amount of fork 21. When the film cassette 50 is loaded in the camera having the rotating amount measuring unit, the microcomputer 24 controls the driver 35 to drive the motor 37 so as to rotate the fork 21 in the reverse direction. The spool 5 is rotated in the reverse direction, so that the film roll 3a is wound more tightly from the inner turns.

The motor 37 rotates the fork 21 by N rotations, at the end of which the fork 21 is stopped by supplying a stop signal from the rotating amount measuring unit to the microcomputer 24. The above tightening wind-up is performed in the inner turns, but not in the outer turns, by which the film roll 3a is held in the state illustrated in Fig. 10. The force of the outer surface of the film roll 3a for pressing the annular ridges 52 becomes smaller. It is noted that predetermination of the rotating amount N of the fork 21 to be 3 to 5 makes it possible to reduce the pressing force of the film roll 3a against the annular ridges 52 even without shifting the relative position of the film leader 3b to the cassette shell 51.

The microcomputer 24 controls the driver 35 to drive the motor 37 for rotation in the normal direction. When the motor 37 is rotated in the normal direction, the spool 5 is rotated in the normal direction by use of the fork 21. The film leader 3b is advanced by rotation out of the cassette shell 51 as illustrated in Fig. 11. The rotation of the fork 21 in the normal direction is smoothly carried out, because the pressing force of the outer surface of the film roll 3a against the annular ridges 52 is reduced by tightening the inner turns of the film roll 3a when advancing the film leader 3a in the camera according to the present embodiment. Although the camera according to the present embodiment is loaded with the film cassette 50 of which no arresting structure is included for arresting the film leader 3b on the cassette shell, the same camera can be also loaded with the film cassette 2 of which the film leader 3b is arrested on the cassette shell.

Although the load on, or the number of rotations of, the fork 21 is measured and compared by use of the motor 37 to stop the fork 21 from rotating in the reverse direction before advancing the photographic film 3, alternatively the microcomputer 24 may control a timing for stopping the motor 37 by measuring the rotating time of the fork 21.

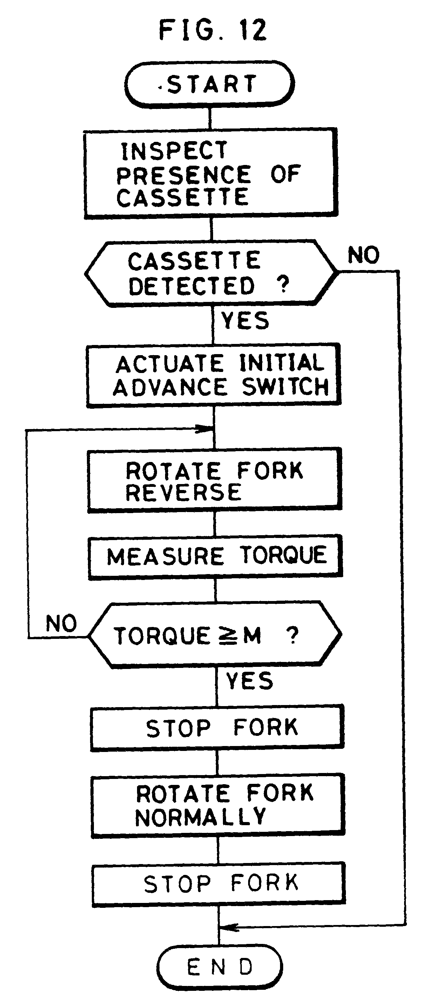

Referring now to Fig. 12 illustrating a camera according to a further preferred embodiment, the camera is provided with a manipulable film initial advance switch for being operated to advance the film leader after loading the film cassette, unlike the camera of the former embodiments in which the film initial advance is automatically effected according to the operation of the back lid switch 10a and the cassette detecting switch 22. The initial advance switch may be either unified with the shutter release switch 28, or separated therefrom. While the back lid switch 10a and the cassette detecting switch 22 are actuated in the present embodiment, the microcomputer 24 is under a condition of standing by for the actuation of the initial advance switch in order to carry out film initial advance.

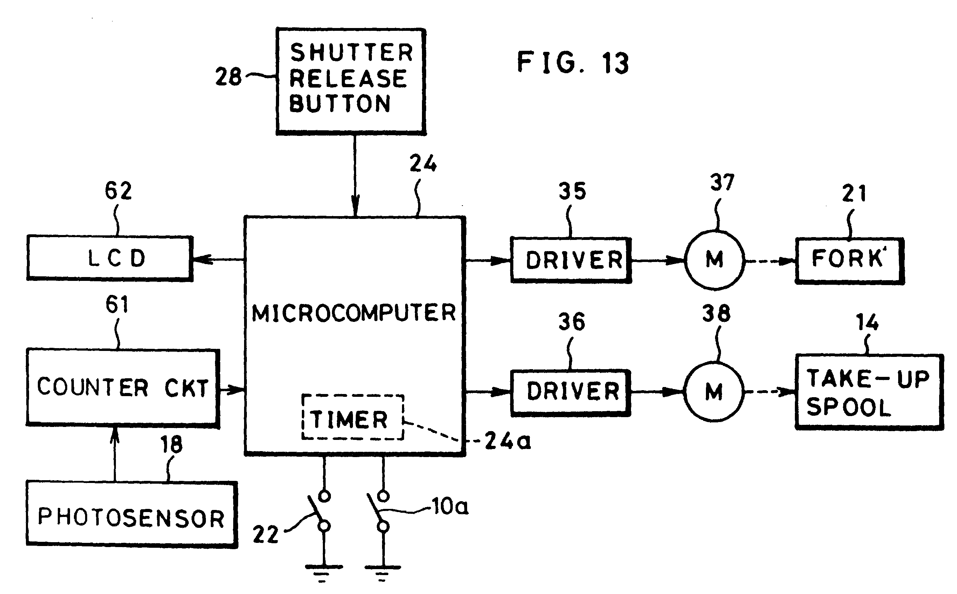

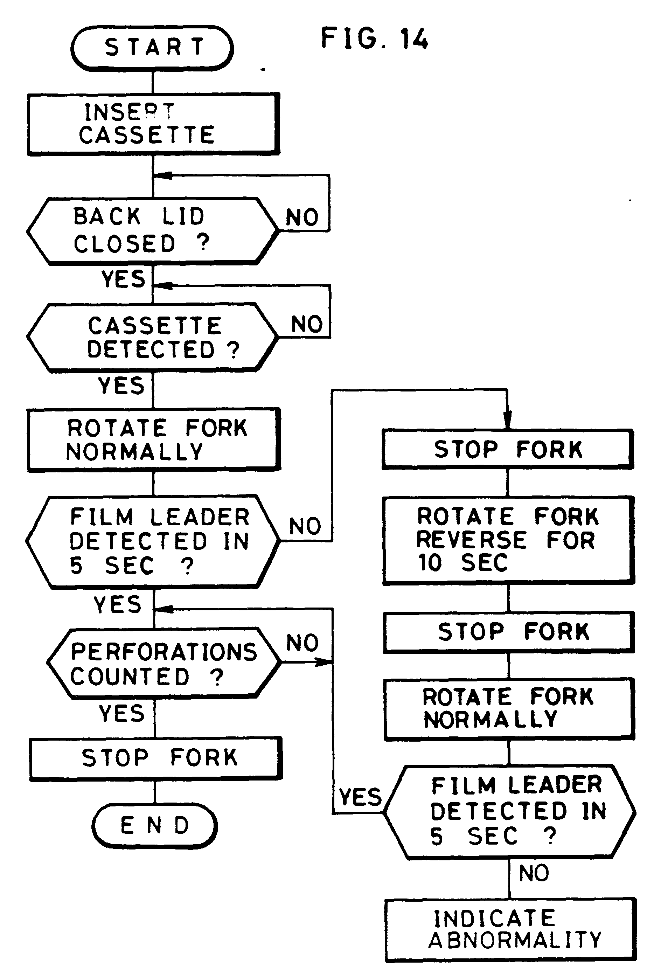

Referring to Figs. 13 and 14 illustrating a camera according to yet another preferred embodiment, elements similar to those in the first embodiment are designated by the same reference numerals in Fig. 13. In the former embodiments, the fork 21 is first rotated in the reverse direction in order to reduce looseness in winding the film roll 3a, and secondly rotated in the normal direction in order to reliably advance the film leader 3a out of the cassette shell 4. In the present embodiment, the fork 21 is first rotated in the normal direction to advance the film leader 3b. If it is impossible to advance the film leader 3b in spite of rotating the spool 5, the state of impossibility is detected to rewind the photographic film 3 by reverse rotating the spool 5, to reduce looseness of the film roll 3a in the cassette shell 4, and to rotate the fork 21 in the normal direction. If the film leader 3b cannot be advanced even by two times' normal rotation of the spool 5, an indication of abnormality such as "FILM JAM" is indicated on a liquid crystal display panel 62. It is noted that the camera according to the present embodiment may be loaded both with the film cassette 2 in which the film leader 3b is arrested on the cassette shell 4, and the film cassette 50 in which no film leader is arrested on the cassette shell 51.

The operation of a film initial advance in the above-constructed camera is described. When the back lid switch 10a and the cassette detecting switch 22 are turned on, the microcomputer 24 controls the driver 35 for driving the motor 37 so as to rotate the fork 21 in the normal direction. The film leader 3b of the photographic film 3 is advanced out of the cassette shell 4 or 51.

When the leading end of the film leader 3b passes over the photosensor 18, the photosensor 18 detects passage of the photographic film 3 and supplies a detecting signal to a counter circuit 61. When a film portion of forming no perforation thereon passes the photosensor 18, the output corresponds the continuous passage of the photographic film 4. When the perforations 6 pass the photosensor 18, the photosensor 18 supplies no output. The detecting signal is in a waveform of pulses constituting a repetition of an output and no output. The counter circuit 61 supplies a film detecting signal to the microcomputer 24 upon receiving an initial detecting signal from the photosensor 18, and counts the pulses of the detecting signal so as to supply the microcomputer 24 with a count signal according to the number of the counted pulses.

If the microcomputer 24 receives the film detecting signal at the lapse of 5 seconds or less from supplying the drive signal for the driver 35 in accordance with measurement of time in a timer 24a incorporated in the microcomputer 24, then it is judged that the film leader 3b is successfully advanced out of the cassette shell. The microcomputer 24 effects a control of driving the motor 37 until the count value of the count signal reaches a predetermined count value. Because the take-up spool 14 has begun rotation, the film leader 3b is taken up and wound on the take-up spool 14. The maximum time from supplying the drive signal to receiving the film detecting signal is predetermined in the microcomputer 24 to be 5 seconds, but is not limited to this time period in accordance with the present invention.

When the count value reaches the predetermined value, the microcomputer 24 supplies the driver 35 with a stop signal to stop the motor 37 from rotating. A first frame to be exposed of the photographic film 3 is positioned on the exposure aperture 12 to finish the film initial advance.

If the microcomputer 24 receives no film detecting signal even at the lapse of 5 seconds or less from supplying the drive signal for the driver 35, then the microcomputer 24 judges that the film leader 4b has failed to be advanced, stops the motor 37 from rotating, and supplies a reverse drive signal to the driver 35 for driving the motor 37 reverse to the initial rotation. The spool 5 is rotated through the fork 21 in the reverse direction so as to reduce looseness of the film roll 3a.

The microcomputer 24 stops the motor 37 from reverse rotating at the lapse of approximately 10 seconds from supplying the reverse drive signal, and then supplies a drive signal to drive the motor 37 to rotate with the fork 21 in the normal or initial direction. If the microcomputer 24 receives no film detecting signal even at the lapse of 5 seconds or less from supplying the second drive signal, then it supplies a signal for indicating an abnormal state on the liquid crystal display panel 62. The time period from supplying the reverse drive signal to stopping reverse rotating the motor 37 is predetermined to be 10 seconds, but is not limited to this time period in accordance with the present invention.

It is noted that, although two kinds of film cassette in which the photographic film is prevented from loosening by the flanges and annular ridges are used with the camera according to the present invention, a film cassette to be used may be alternatively a type as disclosed in U.S.P. 4,846,418 and 4,887,776, in which the spool is constituted of a pair of spool pieces which are slid toward each other to clamp the film roll. Although the perforations are formed on the photographic film eight per frame, it is possible to use a photographic film on which one perforation is formed per frame.

Although the present invention has been fully described by way of the preferred embodiments thereof with reference to the accompanying drawings, various changes and modifications will be apparent to those having skill in this field. Therefore, unless otherwise these changes and modifications depart from the scope of the present invention, they should be construed as included therein.

## Claims

1. A photographic camera including an exchangeable photographic film cassette of the type in which rotation of a spool (5a) causes a film leader (3b) of a photographic film (3) to advance out of said film cassette (2;50), comprising:
a cassette chamber (13) for containing said film cassette (2;50);
a rotary member (21) provided in said cassette chamber (13) for being coupled with said spool (5a) of said film cassette (2;50) in order to rotate said spool (5a) ;
a motor for rotating said rotary member in a normal unwinding direction in order to advance said film leader (36) out of said cassette and in a reverse direction for rewinding said film; and
a drive control means (24;35) for rotating said motor (37) in a reverse and normal direction;
**characterized in that**
said camera further comprises load measuring means (39) for measuring a load applied to said rotary member (21) while rotating said rotary member (21) in said reverse direction; and
said drive control means (24) is arranged to change rotation of said rotary member (21) from said reverse direction to said normal direction when a measured rotary load reaches a predetermined value.

2. A photographic camera as defined in claim 1, wherein said film cassette (2) includes:
an arresting hole (7) formed on said film leader (3b) ; and
a hook (9) formed in a film passageway (8) through which said photographic film (3) passes for arresting said arresting hole (7) in order to prevent all said film leader (3b) from being rewound in an interior to said film passageway (8).

3. A photographic camera as defined in claim 1 or 2, wherein said film cassette (2;50) includes:
at least one annular ridge (4a,4b;52) formed on a circumferential inside surface of a cassette shell (4;51) of said film cassette (2;50) in an annular disposition for contact with an outermost surface of said film roll (3a) to prevent said film roll (3a) from loosening;
two clamping ridges (4c,4d) formed on both lateral inside surfaces of said cassette shell (4;51) for pressing flanges (5b) of said spool (5a) to clamp outer turns of said film roll (3a) from both sides; and
at least one separating claw (4e;53) formed on said circumferential inside surface of said cassette shell (4;51) for separating said film leader (3b) from said outer turns of said film roll (3a) in order to be directed to said film passageway (8;54).

4. A photographic camera as defined in one of claims 1 to 3, wherein a film initial advance switch is provided for being operated in order to initiate the reverse rotation of said rotary member (21).

5. A photographic camera as defined in one of claims 1 to 4, wherein said rotary member (21) is a fork.

6. A photographic camera as defined in one of claims 1 to 5, wherein said drive control means (24,35) includes a driver (35) for driving said motor (37) and a microcomputer (24) for controlling said driver (35).

7. A photographic camera including an exchangeable photographic film cassette of the type in which rotation of a spool (5a) causes a film leader (3b) of a photographic film (3) to advance out of said film cassette (2;50), comprising
a cassette chamber (13) for containing said film cassette (2;50) ;
a rotary member (21) provided in said cassette chamber (13) for being coupled with said spool (5a) of said film cassette (2;50) in order to rotate said spool (5a);
a motor for rotating said rotary member in a normal unwinding direction in order to advance said film leader (36) out of said cassette and in a reverse direction for rewinding said film; and
a drive control means (24;35) for rotating said motor (37) in a reverse and normal direction;
**characterized in that**
said camera further comprises rotating amount measuring means (61) for measuring an amount of rotating said rotating member (21) while rotating said motor (37) in said reverse direction; and
said drive control means (4;35) is arranged to change rotation of said motor (37) from said reverse direction to said normal direction when a measured rotating amount reaches a predetermined value.

8. A photographic camera including an exchangeable photographic film cassette of the type in which rotation of a spool (5a) causes a film leader (3b) of a photographic film (3) to advance out of said film cassette (2;50), comprising
a cassette chamber (13) for containing said film cassette (2;50) ;
a rotary member (21) provided in said cassette chamber (13) for being coupled with said spool (5a) of said film cassette (2;50) in order to rotate said spool (5a);
a motor for rotating said rotary member (21) in a normal unwinding direction in order to advance said film leader (36) out of said cassette and in a reverse direction for rewinding said film; and
a drive control means (24;35) for rotating said motor (37) in a reverse and normal direction;
**characterized in that**
said camera further comprises detecting means (18) for detecting said photographic film (3) fed from said film cassette (2;50) and for generating a detecting signal; and
said drive control means (24,35) is arranged to rotate said motor (37) in said normal direction before rotating said motor (37) in said reverse direction, and to rotate said motor (37) in said reverse direction in order to tighten said film roll (3a) if no detecting signal is generated from said detecting means (18) at a lapse of a predetermined time after starting rotating said motor (37) in said normal direction.

9. A photographic camera as defined in claim 8, wherein a time period for rotating said motor (37) in said reverse direction is predetermined.

10. A photographic camera as defined in claim 9, wherein said detecting means is a photosensor.

11. A method of advancing a film leader (36) of a film cassette (2;50), in which rotation of a spool (5a) in a normal direction of unwinding said photographic film (3) causes said film leader (3b) to advance out of a cassette shell (4;51), in a photographic camera including a cassette chamber (13) for containing said film cassette (2;50) and a rotary member (21) provided in said cassette chamber (13) for being engaged with said spool (5a) of said film cassette (2;50) in order to rotate said spool (5a), said film leader advancing method comprising the steps of:
loading said film cassette (2;50) in said cassette chamber (13);
rotating said rotary member (21) in a reverse direction of rewinding said photographic film (3) for tightening a roll (3a) of said photographic film (3) in order to prevent a film jam when advancing said film leader (13);
rotating said rotary member (21) in said normal direction for advancing said film leader (3b);
measuring a load applied to said rotary member (21) when rotating said rotary member (21) in said reverse direction, and
changing rotation of said rotary member (21) from said reverse direction to said normal direction when a measured rotary load reaches a predetermined value.

12. A method of advancing a film leader (36) of a film cassette (2;50), in which rotation of a spool (5a) in a normal direction of unwinding said photographic film (3) causes said film leader (3b) to advance out of a cassette shell (4;51), in a photographic camera including a cassette chamber (13) for containing said film cassette (2;50) and a rotary member (21) provided in said cassette chamber (13) for being engaged with said spool (5a) of said film cassette (2;50) in order to rotate said spool (5a), said film leader advancing method comprising the steps of:
loading said film cassette (2;50) in said cassette chamber (13);
rotating said rotary member (21) in a reverse direction of rewinding said photographic film (3) for tightening a roll (3a) of said photographic film (3) in order to prevent a film jam when advancing said film leader (13);
rotating said rotary member (21) in said normal direction for advancing said film leader (3b);
measuring a rotating amount of said rotary member (21) when rotating said rotary member (21) in said reverse direction; and
changing rotation of said rotary member (21) from said reverse direction to said normal direction when a measured rotating amount reaches a predetermined value.

13. A method of advancing a film leader (36) of a film cassette (2;50), in which rotation of a spool (5a) in a normal direction of unwinding said photographic film (3) causes said film leader (3b) to advance out of a cassette shell (4;51), in a photographic camera including a cassette chamber (13) for containing said film cassette (2;50) and a rotary member (21) provided in said cassette chamber (13) for being engaged with said spool (5a) of said film cassette (2;50) in order to rotate said spool (5a), said film leader advancing method comprising the steps of:
loading said film cassette (2;50) in said cassette chamber (13);
rotating said rotary member (21) in said normal direction for advancing said film leader (3b);
judging whether a photographic film is advanced; and
rotating said rotary member (21) in a reverse direction of rewinding said photographic film (3) when detecting that no photographic film is advanced at a lapse of a predetermined time period from rotating said rotary member (21) in said normal direction, for tightening a roll (3a) of said photographic film (3), and thereafter rotating said rotary member (21) in said normal direction for advancing said film leader without film jam.

## Patentansprüche

1. Fotokamera, die eine austauschbare Fotofilmkassette des Typs einschließt, bei der eine Drehung einer Spule (5a) bewirkt, daß ein Filmanfang (3b) eines Fotofilms (3) aus der Filmkassecte (2; 50) heraus vorgeschoben wird, mit:
einer Kassettenkammer (13) zum Aufnehmen der Filmkassette (2; 50);
einem Drehelement (21), das in der Kassettenkammer (13) vorgesehen ist, um mit der Spule (5a) der Filmkassette (2; 50) gekoppelt zu sein, um die Spule (5a) zu drehen;
einem Motor zum Drehen des Drehelementes in einer normalen Abspulrichtung, um den Filmanfang (36) aus der Kassette heraus vorzuschieben und zum Drehen in einer Rückwärtsrichtung zum Zurückspulen des Films zu drehen; und
einer Antriebssteuereinrichtung (24; 35) zum Drehen des Motors (37) in eine Rückwärts- und eine Normalrichtung;
**dadurch gekennzeichnet,** daß
die Kamera ferner eine Belastungsmeßeinrichtung (39) umfaßt zum Messen einer Last, die auf das Drehelement (21) aufgebracht wird, während das Drehelement (21) in die Rückwärtsrichtung gedreht wird; und
die Antriebssteuereinrichtung (24) angeordnet ist, um die Drehung des Drehelementes (21) aus der Rückwärtsrichtung in die Normalrichtung zu ändern, wenn eine gemessene Drehbelastung einen vorbestimmten Wert erreicht hat.

2. Fotokamera nach Anspruch 1, wobei die Filmkassette (2) einschließt:
ein Arretierloch (7), das auf dem Filmanfang (3b) ausgebildet ist; und
einen Haken (9), der in einem Filmdurchtritt (8) ausgebildet ist, durch den der Fotofilm (3) hindurchtritt, zum Arretieren des Arretierloches (7), um zu verhindern, daß der Filmanfang (3b) ins Innere des Filmdurchtritts (8) zurückgespult wird.

3. Fotokamera nach Anspruch 1 oder 2, wobei die Filmkassette (2; 50) einschließt:
zumindest eine ringförmige Wulst (4a, 4b; 52), die auf einer Umfangsinnenfläche einer Kassettenkapsel (4; 51) der Filmkassette (2; 50) in einer ringförmigen Anordnung zum Kontakt mit einer Außenfläche der Filmrolle (3a) ausgebildet ist, um zu verhindern, daß sich die Filmrolle (3a) lockert;
zwei Klemmwülste (4c, 4d), die auf beiden Seiteninnenflächen der Kassettenkapsel (4; 51) ausgebildet sind zum Anpressen der Flansche (5b) der Spule (5a), um die äußeren Windungen der Filmrolle (3a) an beiden Seiten zu klemmen; und
zumindest eine Trennklaue (4e; 53), die auf der Umfangsinnenfläche der Kassettenkapsel (4; 51) ausgebildet ist zum Trennen des Filmanfangs (3b) von den äußeren Windungen der Filmrolle (3a), um in den Filmdurchtritt (8; 54) geleitet zu werden.

4. Fotckamera nach einem der Ansprüche 1 bis 3, wobei ein Schalter für ein anfängliches Vorschieben des Films vorgesehen ist, der betätigt wird, um die Rückwärtsdrehung des Drehelementes (21) einzuleiten.

5. Fotokamera nach einem der Ansprüche 1 bis 4, wobei das Drehelement (21) eine Gabel ist.

6. Fotokamera nach einem der Ansprüche 1 bis 5, wobei die Antriebssteuereinrichtung (24, 35) einen Treiber (35) zum Antreiben des Motors (37) und einen Mikrocomputer (24) zum Steuern des Treibers (35) einschließt.

7. Fotokamera, die eine austauschbare Fotofilmkassette des Typs einschließt, bei der eine Drehung einer Spule (5a) bewirkt, daß ein Filmanfang (3b) eines Fotofilms (3) aus der Filmkassette (2; 50) heraus vorgeschoben wird, mit:
einer Kassettenkammer (13) zum Aufnehmen der Filmkassette (2; 50);
einem Drehelement (21), das in der Kassettenkammer (13) vorgesehen ist, um mit der Spule (5a) der Filmkassette (2; 50) gekoppelt zu werden, um die Spule (5a) zu drehen;
einem Motor zum Drehen des Drehelementes in eine normale Abspulrichtung, um den Filmanfang (36) aus der Kassette heraus vorzuschieben und zum Drehen in eine Rückwärtsrichtung zum Zurückspulen des Films; und
einer Antriebssteuereinrichtung (24; 35) zum Drehen des Motors (37) in eine Rückwärts- und eine Normalrichtung;
**dadurch gekennzeichnet,** daß
die Kamera ferner eine Drehgrößen-Meßeinrichtung (61) zum Messen einer Größe der Drehung des Drehelementes (21), während sich der Motor (37) in die Rückwärtsrichtung dreht, umfaßt; und
die Antriebssteuereinrichtung (4; 35) angeordnet ist, um die Drehung des Motors (37) aus der Rückwärtsrichtung in die Normalrichtung zu ändern, wenn eine gemessene Drehgröße einen vorbestimmten Wert erreicht hat.

8. Fotokamera, die eine austauschbare Filmkassette des Typs einschließt, bei dem eine Drehung einer Spule (5a) bewirkt, daß ein Filmanfang (3b) eines Fotofilms (3) aus der Filmkassette (2; 50) heraus vorgeschoben wird, mit:
einer Kassettenkammer (13) zum Aufnehmen der Filmkassette (2; 50);
einem Drehelement (21), das in der Kassettenkammer (13) vorgesehen ist, um mit der Spule (5a) der Filmkassette (2; 50) gekoppelt zu werden, um die Spule (5a) zu drehen;
einem Motor zum Drehen des Drehelementes (21) in eine normale Abspulrichtung, um den Filmanfang (36) aus der Kassette heraus vorzuschieben und zum Drehen in eine Rückwärtsrichtung zum Zurückspulen des Films; und
einer Antriebssteuereinrichtung (24; 35) zum Drehen des Motors (37) in eine Rückwärts- und eine Normalrichtung;
**dadurch gekennzeichnet,** daß
die Kamera ferner eine Nachweiseinrichtung (18) zum Nachweisen umfaßt, daß der Fotofilm (3) aus der Filmkassette (2; 50) vorgeschoben wird und zum Erzeugen eines Nachweissignals; und
die Antriebssteuereinrichtung (24; 35) angeordnet ist, um den Motor (37) in die Normalrichtung zu drehen, bevor der Motor (37) in die Rückwärtsrichtung gedreht wird, und um den Motor (37) in die Rückwärtsrichtung zu drehen, um die Filmrolle (3a) zu straffen, wenn kein Nachweissignal von der Nachweiseinrichtung (18) nach Verstreichen einer vorbestimmten Zeit nach Starten der Drehung des Motors (37) in die Normalrichtung erzeugt wurde.

9. Fotokamera nach Anspruch 8, wobei eine Zeitperiode zum Drehen des Motors (37) in die Rückwärtsrichtung eine vorbestimmte Zeitperiode ist.

10. Fotokamera nach Anspruch 9, wobei die Nachweiseinrichtung ein Fotosensor ist.

11. Verfahren des Vorschiebens eines Filmanfangs (36) einer Filmkassette (2; 50), bei dem eine Drehung einer Spule (5a) in einer Normalrichtung des Abspulens des Fotofilms (3) bewirkt, daß der Filmanfang (3b) aus der Kassettenkapsel (4; 51) heraus vorgeschoben wird, wobei das Verfahren bei einer Fotokamera ausgeführt wird, die eine Kassettenkammer (13) einschließt zum Aufnehmen der Filmkassette (2; 50) und ein Drehelement (21) einschließt, das in der Kassettenkammer (13) vorgesehen ist, um mit der Spule (5a) der Filmkassette (2; 50) in Eingriff befindlich zu sein, um die Spule (5a) zu drehen, wobei das Verfahren zum Vorschieben des Filmanfangs folgende Stufen umfaßt:
Einlegen der Filmkassette (2; 50) in die Kassettenkammer (13);
Drehen des Drehelementes (21) in eine Rückwärtsrichtung zum Zurückspulen des Fotofilms (3) zum Straffen einer Rolle (3a) des Fotofilms (3), um einen Filmstau zu verhindern, wenn der Filmanfang (13) vorgeschoben wird;
Drehen des Drehelementes (21) in die Normalrichtung zum Vorschieben des Filmanfangs (3b);
Messen einer Belastung, die auf das Drehelement (21) aufgebracht wird, wenn sich das Drehelement (21) in die Rückwärtsrichtung dreht; und
Ändern der Drehung des Drehelementes (21) aus der Rückwärtsrichtung in die Normalrichtung, wenn eine gemessene Drehbelastung einen vorbestimmten Wert erreicht hat.

12. Verfahren des Vorschiebens eines Filmanfangs (36) einer Filmkassette (2; 50), bei der eine Drehung einer Spule (5a) in einer Normalrichtung des Abspulens des Fotofilms (3) bewirkt, daß der Filmanfang (3b) aus der Kassettenkapsel (4; 51) heraus vorgeschoben wird, wobei das Verfahren in einer Fotokamera ausgeführt wird, die eine Kassettenkammer (13) zum Aufnehmen der Filmkassette (2; 50) einschließt und ein Drehelement (21) einschließt, das in der Kassettenkammer (13) vorgesehen ist, um mit der Spule (5a) der Filmkassette (2; 50) in Eingriff befindlich zu sein, um die Spule (5a) zu drehen, wobei das Verfahren zum Vorschieben des Filmanfangs folgende Stufen umfaßt:
Einlegen der Filmkassette (2; 50) in die Kassettenkammer (13);
Drehen des Drehelementes (21) in eine Rückwärtsrichtung zum Zurückspulen des Fotofilms (3) zum Straffen einer Rolle (3a) des Fotofilms (3), um einen Filmstau zu verhindern, wenn der Filmanfang (13) vorgeschoben wird;
Drehen des Drehelementes (21) in die Normalrichtung zum Vorschieben des Filmanfangs (3b);
Messen einer Drehgröße des Drehelementes (21), wenn das Drehelement (21) in die Rückwärtsrichtung gedreht wird; und
Ändern der Drehung des Drehelementes (21) aus der Rückwärtsrichtung in die Normalrichtung, wenn eine gemessene Drehgröße einen vorbestimmten Wert erreicht hat.

13. Verfahren des Vorschiebens eines Filmanfangs (36) einer Filmkassette (2; 50), bei der eine Drehung einer Spule (5a) in einer Normalrichtung des Abspulens des Fotofilms (3) bewirkt, daß der Filmanfang (3b) aus einer Kassettenkapsel (4; 51) heraus vorgeschoben wird, wobei das Verfahren in einer Fotokamera ausgeführt wird, die eine Kassettenkammer (13) zum Aufnehmen der Filmkassette (2; 50) einschließt und ein Drehelement (21) einschließt, das in der Kassettenkammer (13) vorgesehen ist, um mit der Spule (5a) der Filmkassette (2; 50) in Eingriff befindlich zu sein, um die Spule (5a) zu drehen, wobei das Verfahren zum Vorschieben des Filmanfangs folgende Stufen umfaßt:
Einlegen der Filmkassette (2; 50) in die Kassettenkammer (13) ;
Drehen des Drehelementes (21) in die Normalrichtung zum Vorschieben des Filmanfangs (3b);
Entscheiden, ob ein Fotofilm vorgeschoben wird; und
Drehen des Drehelementes (21) in eine Rückwärtsrichtung zum Zurückspulen des Fotofilms (3), wenn nachgewiesen wird, daß kein Fotofilm nach Verstreichen einer vorbestimmten Zeitperiode vom Drehen des Drehelementes (21) ab in die Normalrichtung vorgeschoben wird, zum Straffen einer Rolle (3a) des Fotofilms (3), und danach Drehen des Drehelementes (21) in die Normalrichtung zum Vorschieben des Filmvorschubs ohne einen Filmstau.

## Revendications

1. Appareil photographique comprenant une cassette de film photographique interchangeable du type dans lequel une rotation d'une bobine (5a) amène une amorce de film (3b) d'un film photographique (3) à avancer hors de ladite cassette de film (2; 50), comportant :
une chambre de cassette (13) destinée à contenir ladite cassette de film (2; 50);
un élément rotatif (21) prévu dans ladite chambre de cassette (13) afin d'être relié à ladite bobine (5a) de ladite cassette de film (2; 50) de façon à faire tourner ladite bobine (5a) ;
un moteur destiné à faire tourner ledit élément rotatif dans une direction normale de déroulement afin d'avancer ladite amorce de film (3b) hors de ladite cassette et en sens inverse afin de rembobiner ledit film; et
des moyens de commande d'entraînement (24; 35) destinés à faire tourner ledit moteur (37) en sens normal et en sens inverse;
caractérisé en ce que
ledit appareil comporte en outre des moyens de mesure de charge (39) destinés à mesurer une charge appliquée sur ledit élément rotatif (21) lors de la rotation dudit élément rotatif (21) dans ledit sens inverse; et
lesdits moyens de commande d'entraînement (24) sont prévus pour modifier la rotation dudit élément rotatif (21) dudit sens inverse vers ledit sens normal lorsqu'une charge de rotation mesurée atteint une valeur prédéterminée.

2. Appareil photographique selon la revendication 1, dans lequel ladite cassette de film (2) comprend :
un trou d'arrêt (7) formé sur ladite amorce de film (3b); et
un crochet (9) formé dans un passage de film (8) à travers lequel passe ledit film photographique (3) afin d'arrêter ledit trou d'arrêt (7) de façon à empêcher la totalité de ladite amorce de film (3b) d'être rembobinée à l'intérieur dudit passage de film (8).

3. Appareil photographique selon la revendication 1 ou 2, dans lequel ladite cassette de film (2; 50) comprend :
au moins une nervure annulaire (4a, 4b; 52) formée sur une surface intérieure circonférentielle d'un boîtier de cassette (4; 51) de ladite cassette de film (2; 50) dans une disposition annulaire pour un contact avec une surface extérieure dudit rouleau de film (3a) de façon à empêcher ledit rouleau de film (3a) de se détendre;
deux nervures de serrage (4c, 4d) formées sur les deux surfaces latérales intérieures dudit boîtier de cassette (4; 51) afin de presser des joues (5b) de ladite bobine (5a) de façon à serrer les tours extérieurs dudit rouleau de film (3a) des deux côtés; et
au moins une griffe de séparation (4e; 53) formée sur ladite surface inférieure circonférentielle dudit boîtier de cassette (4; 51) afin de séparer ladite amorce de film (3b) desdits tours extérieurs dudit rouleau de film (3a) de façon à être dirigée vers ledit passage de film (8; 54).

4. Appareil photographique selon l'une des revendications 1 à 3, dans lequel un contacteur d'avance initial de film est prévu pour être actionné afin de commencer la rotation en sens inverse dudit élément rotatif (21).

5. Appareil photographique selon l'une des revendications 1 à 4, dans lequel ledit élément rotatif (21) est une fourchette.

6. Appareil photographique selon l'une des revendications 1 à 5, dans lequel lesdits moyens de commande d'entraînement (24; 35) comprennent un circuit de commande (35) destiné à commander ledit moteur (37) et un microcalculateur (24) destiné à commander ledit circuit de commande (35).

7. Appareil photographique comprenant une cassette de film photographique interchangeable du type dans lequel une rotation d'une bobine (5a) amène une amorce de film (3b) d'un film photographique (3) à avancer hors de ladite cassette de film (2; 50), comportant :
une chambre de cassette (13) destinée à contenir ladite cassette de film (2; 50);
un élément rotatif (21) prévu dans ladite chambre de cassette (13) afin d'être relié à ladite bobine (5a) de ladite cassette de film (2; 50) de façon à faire tourner ladite bobine (5a) ;
un moteur destiné à faire tourner ledit élément rotatif dans une direction normale de déroulement afin d'avancer ladite amorce de film (3b) hors de ladite cassette et en sens inverse afin de rembobiner ledit film; et
des moyens de commande d'entraînement (24; 35) destinés à faire tourner ledit moteur (37) en sens normal et en sens inverse;
caractérisé en ce que
ledit appareil comporte en outre des moyens de mesure de valeur de rotation (61) destinés à mesurer une valeur de rotation dudit élément rotatif (21) lors de la rotation dudit moteur (37) dans ledit sens inverse; et
lesdits moyens de commande d'entraînement (24; 35) sont prévus pour modifier la rotation dudit moteur (37) dudit sens inverse vers ledit sens normal lorsqu'une valeur de rotation mesurée atteint une valeur prédéterminée.

8. Appareil photographique comprenant une cassette de film photographique interchangeable du type dans lequel une rotation d'une bobine (5a) amène une amorce de film (3b) d'un film photographique (3) à avancer hors de ladite cassette de film (2; 50), comportant :
une chambre de cassette (13) destinée à contenir ladite cassette de film (2; 50);
un élément rotatif (21) prévu dans ladite chambre de cassette (13) afin d'être relié à ladite bobine (5a) de ladite cassette de film (2; 50) de façon à faire tourner ladite bobine (5a);
un moteur destiné à faire tourner ledit élément rotatif (21) dans une direction normale de déroulement afin d'avancer ladite amorce de film (3b) hors de ladite cassette et en sens inverse afin de rembobiner ledit film; et
des moyens de commande d'entraînement (24; 35) destinés à faire tourner ledit moteur (37) en sens normal et en sens inverse;
caractérisé en ce que
ledit appareil comporte en outre des moyens de détection (18) destinés à détecter ledit film photographique (3) avancé depuis ladite cassette de film (2; 50) et destinés à générer un signal de détection; et
lesdits moyens de commande d'entraînement (24; 35) sont prévus pour faire tourner ledit moteur (37) dans ledit sens normal avant de faire tourner ledit moteur (37) dans ledit sens inverse, et pour faire tourner ledit moteur (37) dans ledit sens inverse afin de serrer ledit rouleau de film (3a) si aucun signal de détection n'est généré par lesdits moyens de détection (18) après écoulement d'un temps prédéterminé après le début de la rotation dudit moteur (37) dans ledit sens normal.

9. Appareil photographique selon la revendication 8, dans lequel une durée de rotation dudit moteur (37) dans ledit sens inverse est prédéterminée.

10. Appareil photographique selon la revendication 9, dans lequel lesdits moyens de détection sont constitués par un photodétecteur.

11. Procédé d'avance d'une amorce de film (3b) d'une cassette de film (2; 50), dans laquelle la rotation d'une bobine (5a) dans un sens normal de déroulement dudit film photographique (3) amène ladite amorce de film (3b) à avancer hors d'un boîtier de cassette (4; 51), dans un appareil photographique comprenant une chambre de cassette (13) destinée à contenir ladite cassette de film (2; 50) et un élément rotatif (21) prévu dans ladite chambre de cassette (13) afin d'être engagé avec ladite bobine (5a) de ladite cassette de film (2; 50) de façon à faire tourner ladite bobine (5a), ledit procédé d'avance d'amorce de film comportant les étapes consistant à :
charger ladite cassette de film (2; 50) dans ladite chambre de cassette (13);
faire tourner ledit élément rotatif (21) en sens inverse afin de rembobiner ledit film photographique (3) de façon à serrer un rouleau (3a) dudit film photographique (3) afin d'empêcher un bourrage de film lors de l'avance de ladite amorce de film (3b);
faire tourner ledit élément rotatif (21) dans ledit sens normal afin d'avancer ladite amorce de film (3b) ;
mesurer une charge appliquée sur ledit élément rotatif (21) lors de la rotation dudit élément rotatif (21) dans ledit sens inverse; et
changer la rotation dudit élément rotatif (21) dudit sens inverse vers ledit sens normal lorsqu'une charge de rotation mesurée atteint une valeur prédéterminée.

12. Procédé d'avance d'une amorce de film (3b) d'une cassette de film (2; 50), dans laquelle la rotation d'une bobine (5a) dans un sens normal de déroulement dudit film photographique (3) amène ladite amorce de film (3b) à avancer hors d'un boîtier de cassette (4; 51), dans un appareil photographique comprenant une chambre de cassette (13) destinée à contenir ladite cassette de film (2; 50) et un élément rotatif (21) prévu dans ladite chambre de cassette (13) afin d'être engagé avec ladite bobine (5a) de ladite cassette de film (2; 50) de façon à faire tourner ladite bobine (5a), ledit procédé d'avance d'amorce de film comportant les étapes consistant à :
charger ladite cassette de film (2; 50) dans ladite chambre de cassette (13);
faire tourner ledit élément rotatif (21) en sens inverse afin de rembobiner ledit film photographique (3) de façon à serrer un rouleau de film (3a) dudit film photographique (3) afin d'empêcher un bourrage de film lors de l'avance de ladite amorce de film (3b) ;
faire tourner ledit élément rotatif (21) dans ledit sens normal afin d'avancer ladite amorce de film (3b);
mesurer une valeur de rotation dudit élément rotatif (21) lors de la rotation dudit élément rotatif (21) dans ledit sens inverse; et
changer la rotation dudit élément rotatif (21) dudit sens inverse vers ledit sens normal lorsqu'une valeur de rotation mesurée atteint une valeur prédéterminée.

13. Procédé d'avance d'une amorce de film (3b) d'une cassette de film (2; 50), dans laquelle la rotation d'une bobine (5a) dans un sens normal de déroulement dudit film photographique (3) amène ladite amorce de film (3b) à avancer hors d'un boîtier de cassette (4; 51), dans un appareil photographique comprenant une chambre de cassette (13) destinée à contenir ladite cassette de film (2; 50) et un élément rotatif (21) prévu dans ladite chambre de cassette (13) afin d'être engagé avec ladite bobine (5a) de ladite cassette de film (2; 50) de façon à faire tourner ladite bobine (5a), ledit procédé d'avance d'amorce de film comportant les étapes consistant à :
charger ladite cassette de film (2; 50) dans ladite chambre de cassette (13);
faire tourner ledit élément rotatif (21) dans ledit sens normal afin d'avancer ladite amorce de film (3b);
estimer si un film photographique est avancé; et
faire tourner ledit élément rotatif (21) en sens inverse afin de rembobiner ledit film photographique (3) lors de la détection du fait qu'aucun film photographique n'est avancé après écoulement d'une durée prédéterminée à partir de la rotation dudit élément rotatif (21) dans ledit sens normal, de façon à serrer un rouleau de film (3a) dudit film photographique (3), et faire ensuite tourner ledit élément rotatif (21) dans ledit sens normal afin d'avancer ladite amorce de film sans bourrage de film.
